# EUROPÄISCHE PATENTANMELDUNG

(11) **EP 3 059 518 A2**
(43) Veröffentlichungstag der Anmeldung: **24.08.2016**
(21) Anmeldenummer: 15188972.2
(22) Anmeldetag: 08.10.2015
(51) Int. Cl.: F24J 2/20

(54) **ABSORBER FÜR EINEN KOLLEKTOR, SOWIE KOLLEKTOR**

(30) Priorität: 03.12.2014 DE 102014224721
(71) Anmelder: ROBERT BOSCH GMBH, 70442 Stuttgart (DE)
(72) Erfinder: Otting, Herbert, 49832 Beesten (DE); Schneider, Tobias, 48493 Wettringen (DE); Stockel, Markus, 48282 Emsdetten (DE)

(57) **Zusammenfassung**

Die Erfindung betrifft einen Absorber (10) für einen Kollektor, bevorzugt einen thermischen Solarkollektor, zur Wärmeerzeugung, z. B. für eine Warmwasserbereitung und/oder eine Heizungsunterstützung, wobei der Absorber (10) einen vollständig um den Absorber (10) herumlaufenden Außenrand aufweist, wobei wenigstens ein Abschnitt (14) des Außenrands als eine Absorberversteifung (14) ausgebildet ist, wobei der Abschnitt (14) des Außenrands wiederholt von einer Absorberebene (15) in wenigstens eine Richtung herausgebogen ist.

## Beschreibung

Die Erfindung betrifft einen Absorber für einen Kollektor, bevorzugt einen thermischen Solarkollektor, zur Wärmeerzeugung, z. B. für eine Warmwasserbereitung und/oder eine Heizungsunterstützung. Ferner betrifft die Erfindung einen Glas-Absorber-Verbund für einen Kollektor, bevorzugt einen thermischen Solarkollektor zur Wärmeerzeugung, z. B. für eine Warmwasserbereitung und/oder eine Heizungsunterstützung, sowie einen dementsprechenden Kollektor, bevorzugt einen thermischen Solarkollektor.

### Stand der Technik

Angesichts steigender Preise für fossile Energieträger und einer schwindenden Akzeptanz der Atomenergie kommt einer Nutzung regenerativer Energien in der Zukunft eine wachsende Bedeutung zu. So nutzt eine thermische Solarkollektoranlage die Sonnenenergie zur Wärmeerzeugung z. B. für eine Warmwasserbereitung und wahlweise auch zur Heizungsunterstützung, wobei solche Solarkollektoranlagen energiesparend und umweltschonend sind. Dies spart wertvolle Brennstoffe ein und schont die Umwelt durch weniger Schadstoffemissionen. In einer thermischen Solarkollektoranlage wird nicht nur die direkte Sonnenstrahlung in Wärme umgesetzt, sondern auch die diffuse Sonnenstrahlung kann durch die Solarkollektoranlage genutzt werden. So wirken an trüben Tagen mit einem hohen Anteil an diffusem Licht noch bis zu 300 W/m² auf einen Kollektor der Solarkollektoranlage.

Eine Warmwasserbereitung ist eine naheliegende Anwendung für Solarkollektoranlagen. Ein über das gesamte Jahr hinweg konstanter Warmwasserbedarf ist gut mit dem solaren Energieangebot kombinierbar. Im Sommer lässt sich der Energiebedarf für die Warmwasserbereitung nahezu vollständig von der Solarkollektoranlage abdecken. Ferner können Solarkollektoranlagen auch für die Heizungsunterstützung angewendet werden. Allerdings kann die Solarkollektoranlage hierfür nur dann Wärme abgeben, wenn eine Rücklauftemperatur einer Heizung niedriger ist als die Temperatur des oder der Solarkollektoren. Ideal hierfür sind deshalb großflächige Heizkörper mit niedrigen Systemtemperaturen oder Fußbodenheizungen. Bei entsprechender Auslegung deckt die Solarkollektoranlage einen nicht geringen Anteil der benötigten Gesamt-Jahreswärmeenergie für eine Warmwasserbereitung und eine Heizung ab.

Im Mittelpunkt einer jeden Solarkollektoranlage steht neben einem Speicher-oder Puffersystem ein Solarkollektor. Dieser nimmt die Energie der einfallenden Sonnenstrahlen durch einen Absorber auf und wandelt die Energie in Wärme um. Eine durch die Rohre im Absorber fließende Wärmeträgerflüssigkeit, meist ein Gemisch aus Wasser und einem Frostschutzmittel, durchströmt den Absorber, erhitzt sich dabei und transportiert die Wärme z. B. zu einem Wärmetauscher, einem Speicher oder einem Verbraucher. Dem Absorber kommt dabei eine besondere Bedeutung zu. Dieser soll möglichst leicht und kostengünstig gefertigt werden, damit der Absorber und somit auch ein Glas-Absorber-Verbund für einen Solarkollektor möglichst kostengünstig ist. Dabei soll ein thermisch wirksamer Bereich des Glas-Absorber-Verbunds möglichst groß sein.

### Aufgabenstellung

Es ist eine Aufgabe der Erfindung, einen verbesserten Absorber für einen Kollektor, bevorzugt einen thermischen Solarkollektor, zur Wärmeerzeugung, z. B. für eine Warmwasserbereitung und/oder eine Heizungsunterstützung, anzugeben. Ferner ist es eine Aufgabe der Erfindung, einen verbesserten Glas-AbsorberVerbund für einen Kollektor, bevorzugt einen thermischen Solarkollektor, sowie einen verbesserten Kollektor, bevorzugt einen thermischen Solarkollektor, anzugeben. Hierbei soll der Absorber vergleichsweise dünn aus einem Blech, insbesondere einem Aluminiumblech, und vergleichsweise kostengünstig gefertigt werden können, wobei der Absorber eine wenigstens ausreichende Steifigkeit aufweist. Ein thermisch wirksamer Bereich des Glas-Absorber-Verbunds soll dabei vergleichsweise wenig eingeschränkt sein.

### Offenbarung der Erfindung

Die Aufgabe der Erfindung ist mittels eines Absorbers für einen Kollektor, bevorzugt einen thermischen Solarkollektor, zur Wärmeerzeugung, z. B. für eine Warmwasserbereitung und/oder eine Heizungsunterstützung, gemäß Anspruch 1; mittels eines Glas-Absorber-Verbunds für einen Kollektor, bevorzugt einen thermischen Solarkollektor zur Wärmeerzeugung, z. B. für eine Warmwasserbereitung und/oder eine Heizungsunterstützung, gemäß Anspruch 6; und mittels eines Kollektors, bevorzugt eines thermischen Solarkollektors, zur Wärmeerzeugung, z. B. für eine Warmwasserbereitung und/oder eine Heizungsunterstützung, gemäß Anspruch 11 gelöst. Vorteilhafte Weiterbildungen, zusätzliche Merkmale und/oder Vorteile der Erfindung ergeben sich aus den abhängigen Ansprüchen und der folgenden Beschreibung.

Der erfindungsgemäße Absorber weist einen vollständig um den Absorber herumlaufenden Außenrand auf, wobei wenigstens ein Abschnitt des Außenrands als eine Absorberversteifung ausgebildet ist und der Abschnitt des Außenrands wiederholt von einer Absorberebene in wenigstens eine Richtung herausgebogen ist. Eine Außenkante des Absorbers bzw. Außenrands kann korrespondierend zur Absorberversteifung herausgebogen sein, oder die Außenkante des Absorbers bzw. Außenrands kann in der Absorberebene liegen oder zur Absorberebene im Wesentlichen parallel verschoben sein. Hierdurch kann der Absorber vergleichsweise flach ausgebildet und/oder frei von einem tiefgeprägten thermisch wirksamen Bereich sein.

In Ausführungsformen der Erfindung kann der Abschnitt des Außenrands bzw. die Absorberversteifung abseits der Außenkante des Außenrands bzw. des Absorbers im Außenrand vorgesehen sein. Ferner kann zwischen der Außenkante des Außenrands bzw. des Absorbers und dem Abschnitt des Außenrands bzw. der Absorberversteifung ein Außenbund vorgesehen sein. Darüber hinaus kann der Abschnitt des Außenrands bzw. die Absorberversteifung bis zur Außenkante des Außenrands bzw. des Absorbers reichen. Die Absorberversteifung kann dabei im Wesentlichen vollständig um den Absorber herumlaufend ausgebildet sein. Ferner kann der Außenbund im Wesentlichen vollständig um den Absorber herumlaufend ausgebildet sein.

Hierbei ist der Abschnitt des Außenrands bzw. die Absorberversteifung bevorzugt derart definiert bzw. im Absorber eingerichtet, dass einerseits eine Innenkante des Abschnitts des Außenrands bzw. der Absorberversteifung, mit einer Innenkante des Außenrands zusammenfällt; aber andererseits eine Außenkante des Abschnitts des Außenrands bzw. der Absorberversteifung nicht mit einer Außenkante des Außenrands bzw. des Absorbers zusammenfallen muss, aber zusammenfallen kann. D. h. zwischen der Außenkante des Absorbers und dem Abschnitt des Außenrands bzw. der Absorberversteifung kann ein weiteres Material des Absorbers vorliegen, welches nicht wie der Abschnitt des Außenrands bzw. die Absorberversteifung ausgestaltet sein muss (Außenbund), jedoch dementsprechend ausgestaltet sein kann.

Gemäß der Erfindung kann die Absorberversteifung noppenförmig von oder an der Absorberebene wiederholt in eine Richtung und/oder wechselweise wellenförmig in zwei Richtungen weggebogen sein. Eine Amplitude oder ein Spitze-TalWert der Absorberversteifung in Bezug auf eine Außenabmessung des Absorbers ist dabei bevorzugt vergleichsweise klein. Die Amplitude oder der Spitze-Tal-Wert kann dabei im Wesentlichen das zwei-, drei-, vier-, fünf-, sechs-, sieben-, acht-, neun-, zehn-, zwölf-, 14-, 16-, 18-, 20-, 25-fache einer Dicke des Absorbers besitzen. Eine Wellenlänge der Absorberversteifung entspricht bevorzugt im Wesentlichen einem Abstand einer Verrohrung des Absorbers. Des Weiteren kann eine Oberfläche der Absorberversteifung und/oder des Außenbunds wie eine Oberfläche eines thermisch wirksamen Mittenbereichs des Absorbers ausgebildet sein.

In Ausführungsformen der Erfindung kann der Außenbund im Wesentlichen in der Absorberebene liegen oder mit der Absorberebene einen von 180° verschiedenen Winkel einnehmen. Im Außenbund kann dabei eine Verstärkungseinrichtung, z. B. eine Erhebung, ein Vorsprung, eine Ausnehmung, eine Sicke etc., vorgesehen sein. Bevorzugt beträgt eine Dicke des Absorbers ca. 0,75 mm, ca. 0,6 mm, ca. 0,5 mm, ca. 0,4 mm, ca. 0,35 mm oder ca. 0,3 mm. Der Absorber kann Aluminium aufweisen und ist bevorzugt aus einem Aluminiumblech hergestellt. Alternativ kann der Absorber Kupfer aufweisen und ist bevorzugt aus einem Kupferblech hergestellt. Für eine Formgebung des Absorbers eignet sich insbesondere ein Stanzverfahren, wobei ist ein Formstanzverfahren bevorzugt ist, welches die Absorberversteifung beim Ausstanzen des Absorbers im Absorber ausbildet.

Der erfindungsgemäße Glas-Absorber-Verbund weist einen Absorber, eine über dem Absorber angeordnete Glasscheibe und einen zwischen dem Absorber und der Glasscheibe eingebrachten thermischen Abstandhalter auf, wobei wenigstens ein Bereich des thermischen Abstandhalters auf einem Abschnitt des Absorbers vorgesehen ist, in/an welchem der Absorber eine Absorberversteifung besitzt. Die Absorberversteifung kann sich entlang wenigstens eines Abschnitts des Absorbers erstrecken, wobei die Absorberversteifung bevorzugt eine gegenüber einer Absorberebene stetig ändernde Form besitzt, und die Form der Absorberversteifung insbesondere eine sich selbst ähnliche Form ist. Der Absorber des Glas-Absorber-Verbunds kann dabei wie der oben genannte Absorber ausgebildet sein.

Gemäß der Erfindung kann die Absorberversteifung wiederholt in eine Richtung von oder an der Absorberebene wegerstreckend vorgesehen sein. Ferner kann die Absorberversteifung wiederholt wechselweise in zwei Richtungen von oder an der Absorberebene wegerstreckend vorgesehen sein. Des Weiteren kann die Absorberversteifung wiederholt von oder an der Absorberebene in wenigstens eine Richtung weggebogen sein. Darüber hinaus kann die Absorberversteifung noppenförmig oder wellenförmig an der Absorberebene ausgebildet sein. Die Absorberversteifung kann dabei mit dem Absorber einteilig oder einstückig verbunden oder mit dem Absorber stofflich einstückig oder integral ausgebildet sein.

In Ausführungsformen der Erfindung kann zwischen dem thermischen Abstandhalter, der Glasscheibe und dem Absorber ein hermetisch abgeschlossener Raum im Glas-Absorber-Verbund eingerichtet sein. Dieser hermetisch abgeschlossene Raum kann mit einem Edelgas, insbesondere Argon, gefüllt sein. Der thermische Abstandhalter ist bevorzugt als ein thermoplastischer Abstandhalter ausgebildet. - Ferner kann in Ausführungsformen der Erfindung zwischen dem thermischen Abstandhalter, der Glasscheibe und dem Absorber ein mechanischer Abstandhalter im Glas-Absorber-Verbund eingerichtet sein. Dieser mechanische Abstandhalter ist bevorzugt außerhalb des thermischen Abstandhalters vorgesehen. Der mechanische Abstandhalter kann auf einem Außenrand oder einem Außenbund des Absorbers vorgesehen sein. Bevorzugt ist der mechanische Abstandhalter als ein Silikon-Abstandhalter ausgebildet.

Der erfindungsgemäße Kollektor weist einen erfindungsgemäßen Absorber und/ oder einen erfindungsgemäßen Glas-Absorber-Verbund auf. Hierbei kann der Kollektor als ein Aufdach-Kollektor, ein Indach-Kollektor, ein Flachdach-Kollektor, ein Ständer-Kollektor, ein Aufständer-Kollektor oder ein Fassaden-Kollektor ausgebildet sein. Der Kollektor kann dabei als ein Mäander-Kollektor oder ein Harfen-Kollektor konzipiert sein. Gemäß der Erfindung ist der Kollektor oder ein Bestandteil davon bevorzugt als ein Flachkollektor ausgebildet. Hierbei kann der Kollektor wenigstens ein Kollektormodul, insbesondere wenigstens ein Solarmodul, aufweisen.

Gemäß der Erfindung kann auf einen tiefgezogenen Absorber aus Kupfer sowie auf einen flachen und steifen Absorber mit Verstärkungsleiste, welche eine Konzentration von mechanischen Spannungen vermeiden hilft, verzichtet werden. Erfindungsgemäß wird ein Konzept mit einem steifen Absorber durch ein Konzept mit einem vergleichsweise weichen Absorber, insbesondere aus Aluminium, ersetzt. Durch die Weichheit kann keine Konzentration von mechanischen Spannungen mehr auftreten und es kann somit auch nicht zu einer Beschädigung des Absorbers durch eine Spannungskonzentration kommen. Der erfindungsgemäße Absorber ist durch das Verwenden von Aluminium kostengünstiger als ein Absorber aus Kupfer. Darüber hinaus ist der erfindungsgemäße Absorber ohne Verstärkungsleiste nochmals deutlich günstiger, da auf das Extrateil der Verstärkungsleiste verzichtet werden kann.

### Kurzbeschreibung der Zeichnung

Die Erfindung ist im Folgenden anhand von Ausführungsbeispielen einer Variante unter Bezugnahme auf die beigefügte schematische und nicht maßstabsgetreue Zeichnung näher erläutert. Elemente, Bauteile oder Komponenten, welche eine identische, univoke oder analoge Ausbildung und/oder Funktion besitzen, sind in der Figurenbeschreibung und den Patentansprüchen mit denselben Bezugszeichen versehen und in den Figuren der Zeichnung mit denselben Bezugszeichen gekennzeichnet.

Sämtliche erläuterten Merkmale sind nicht nur in der angegebenen Kombination bzw. den angegebenen Kombinationen, sondern auch in einer anderen Kombination bzw. anderen Kombinationen oder in Alleinstellung anwendbar. Insbesondere ist es möglich, anhand der Bezugszeichen und den diesen zugeordneten Merkmalen in der Beschreibung der Erfindung und/oder der Figurenbeschreibung ein Merkmal oder eine Mehrzahl von Merkmalen in der Beschreibung der Erfindung und/oder der Figurenbeschreibung zu ersetzen. Ferner kann dadurch ein Merkmal oder können eine Mehrzahl von Merkmalen in den Patentansprüchen ausgelegt, näher spezifiziert und/oder substituiert werden. - In den Figuren (Fig.) der Zeichnung zeigen:
- Fig. 1: in einer einseitig weggebrochenen seitlichen Schnittansicht einen thermischen Flachkollektor aus dem Stand der Technik mit einer vollständig um einen Absorber des Flachkollektors herumlaufenden herkömmlichen Versteifungsleiste für den Absorber;
- Fig. 2: in einer dreiseitig weggebrochenen Draufsicht eine Ausführungsform eines erfindungsgemäßen Absorbers für einen Glas-Absorber-Verbund gemäß der Erfindung mit wenigstens einem erfindungsgemäß ausgestalteten Abschnitt eines Außenrads des Absorbers;
- Fig. 3: eine zweiseitig weggebrochene Seitenansicht einer Ausführungsform eines erfindungsgemäßen Glas-Absorber-Verbunds für einen Flachkollektor gemäß der Erfindung, wobei der Glas-Absorber-Verbund zwischen dem Absorber und einem thermischen Abstandhalter freigeschnitten ist; und
- Fig. 4: in einer Draufsicht eine Ausführungsform des erfindungsgemäßen Absorbers für den Glas-Absorber-Verbund gemäß der Erfindung mit einem erfindungsgemäß ausgestalteten, vollständig umlaufenden Außenrad des Absorbers.

### Ausführungsformen der Erfindung

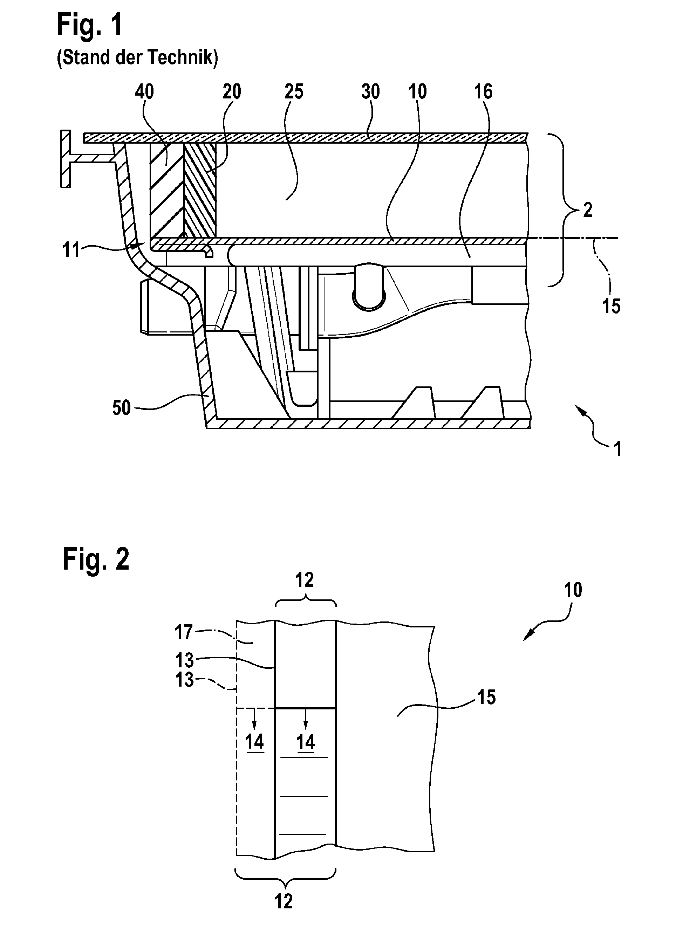

Die Erfindung ist im Folgenden anhand von Ausführungsformen einer Variante (vgl. die Fig. 2 bis 4) eines als Flachkollektor 1 ausgebildeten Kollektors 1 näher erläutert. Die Erfindung ist jedoch nicht auf eine solche Variante und/oder die nachfolgend erläuterten Ausführungsformen beschränkt, sondern ist von grundlegenderer Natur, sodass sie auf sämtliche Kollektoren 1 im Sinne der Erfindung angewendet werden kann, wie z. B. einen thermischen Kollektor 1, ein Kollektormodul 1, einen Solarkollektor 1, ein Solarmodul 1, eine Kollektoranlage 1, eine Solaranlage 1 etc. - Obwohl die Erfindung im Detail durch bevorzugte Ausführungsbeispiele näher beschrieben und illustriert ist, so ist die Erfindung nicht durch diese offenbarten Beispiele eingeschränkt. Andere Variationen können hieraus abgeleitet werden ohne den Schutzumfang der Erfindung zu verlassen.

Die Fig. 1 zeigt ein als ein Solarkollektormodul 1 ausgebildetes Flachkollektormodul 1 gemäß dem Stand der Technik mit einem herkömmlichen Glas-Absorber-Verbund 2. Der Glas-Absorber-Verbund 2 besitzt in seinem Inneren einen mit Argon gefüllten hermetisch abgeschlossenen Raum 25 zwischen einem Absorber 10 bzw. einem Absorberblech 10 und einer Glasscheibe 30. Begrenzt ist dieser Raum 25 von einem thermoplastischen Abstandhalter 20, der auch als thermoplastischer Spacer (TPS) 20 bezeichnet werden kann. Dieser thermoplastische Abstandhalter 20 isoliert den Glas-Absorber-Verbund 2 nach dessen Umfangsseite hin thermisch. Der thermoplastische Abstandhalter 20 ist dabei abseits einer um den Absorber 10 herumlaufenden Verstärkungsleiste 11 innerhalb der Verstärkungsleiste 11 auf dem flach (Absorberebene 15, siehe unten) ausgebildeten Absorber 10 vorgesehen. Für eine ausreichende mechanische Stabilität befindet sich außerhalb des thermischen Abstandhalters 20 zwischen dem Absorber 10 und der Glasscheibe 30 ein Silikon-Abstandhalter 40.

Der Absorber 10 weist ferner unterhalb (Fig. 1) hermetisch abgeschlossenen Raums 25 eine bevorzugt als eine Mäander-Verrohrung 16 oder eine Harfen-Verrohrung 16 ausgebildete Verrohrung 16 auf, welche mit dem Absorber 10 in einer stofflich einstückigen, mechanischen Verbindung steht. In einem Betrieb des Solarkollektormoduls 1 fließt durch diese Verrohrung 16 eine Wärmeträgerflüssigkeit, welche die im Glas-Absorber-Verbund 2 gesammelte Wärme aus dem Glas-Absorber-Verbund 2 transportiert. Der Glas-Absorber-Verbund 2 ist in einem Gehäuse 50 des Solarkollektormoduls 1 vorgesehen, wobei eine Mehrzahl von Gehäusen 50 von Solarkollektormodulen 1 miteinander fluidmechanisch in einer Solarkollektoranlage 1 verschaltet sein können. Natürlich kann die Solarkollektoranlage 1 auch nur ein einziges Solarkollektormodul 1 aufweisen.

Gemäß der Erfindung ist die Funktion der Verstärkungsleiste 11 in den Absorber 10 bzw. das Absorberblech 10 integriert, sodass die Verstärkungsleiste 11 weggelassen werden kann, was Kosten spart, da auf die Verstärkungsleiste 11 verzichtet werden kann und alle mit ihr verbunden Kosten, z. B. ferner Montagekosten, eingespart werden können. Des Weiteren kann eine Applikation des bevorzugt als thermoplastischen Abstandhalters 20 ausgebildeten thermischen Abstandhalters 20 in diesen Bereich verlagert werden, wodurch sich eine thermisch wirksame Fläche 15 des Absorbers 10 erhöht. Hierbei muss eine entsprechende Region des Abstandhalters 20 einerseits dem Absorber 10 in Abhängigkeit seiner Dicke eine ausreichende Steifigkeit verleihen und darüber hinaus muss diese Region derart ausgestaltet sein, dass der thermische Abstandhalter 20 darauf derart appliziert werden kann, dass er später seine Funktion erfüllen kann.

Ersteres erfolgt bevorzugt mittels einer in den Absorber 10 integrierten Absorberversteifung 14, d. h. in ein Material des Absorbers 10 wird die Absorberversteifung 14, bevorzugt durch Umformen, eingebracht. Zweiteres erfolgt durch eine gezielte Formgebung dieser Absorberversteifung 14, wobei die Absorberversteifung 14 insbesondere keine Unstetigkeitsstellen aufweisen soll und sich deren Verlauf kontinuierlich und nicht abrupt verändert. Die Absorberversteifung 14 bildet dabei wenigstens einen Abschnitt 14 (Fig. 2) eines vergleichsweise kleinen, thermisch lediglich wenig wirksamen bzw. im Wesentlichen unwirksamen Außenrands 12 des Absorbers 10, welcher um einen vergleichsweise großen thermisch wirksamen Mittenbereich 15 des Absorbers 10 umläuft. Der thermisch wirksame Mittenbereich 15 liegt dabei bevorzugt in einer Absorberebene 15.

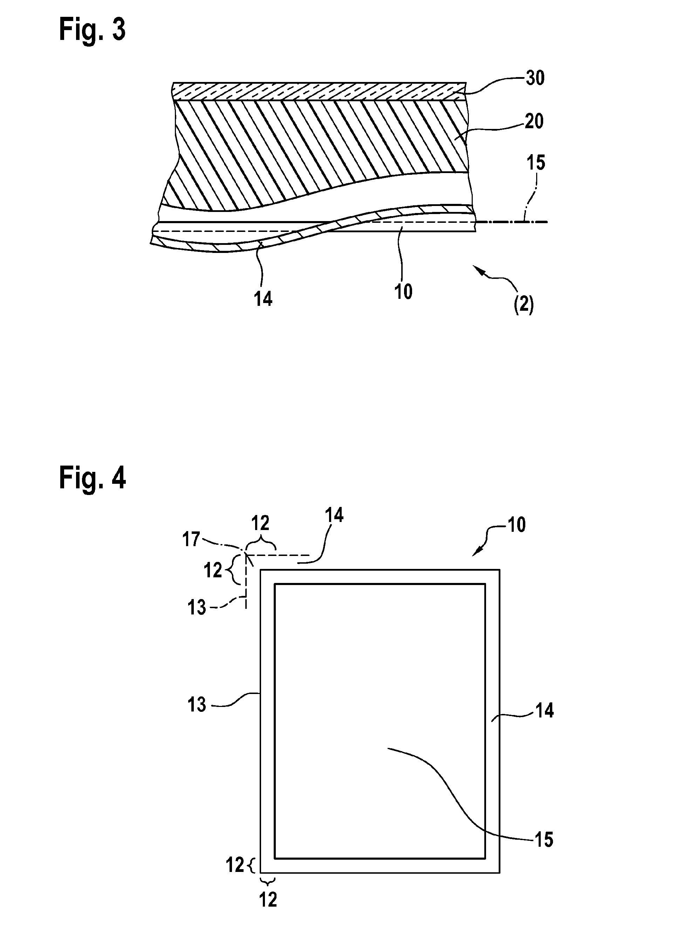

Hierbei kann die Absorberversteifung 14 vollständig um den thermisch wirksamen Mittenbereich 15 umlaufen (Fig. 4), wobei sich die Absorberversteifung 14 bis an eine Außenkante 13 des Absorbers 10 bzw. des Außenrands 12 erstrecken kann. Gemäß der Erfindung ist dabei der thermische Abstandhalter 20 und ggf. der außen am thermischen Abstandhalter 20 vorgesehene mechanische Abstandhalter 40 (in der Fig. 2 weggelassen) auf der Absorberversteifung 14 platziert. - In einer anderen Ausführungsform befindet sich außerhalb der Absorberversteifung 14 ein Außenbund 17 (jeweils strichpunktiertes Bezugszeichen in den Fig. 2 und 4), der z. B. vollflächig in der Absorberebene 15 liegen kann. Gemäß der Erfindung ist dabei der thermische Abstandhalter 20 auf der Absorberversteifung 14 und der mechanische Abstandhalter 40 auf dem Außenrand 12 platziert.

Gemäß der Erfindung ist die Absorberversteifung 14 bevorzugt noppenförmig (lediglich Wellenberge bzw. Wellentäler) (nicht dargestellt) oder wellenförmig (vgl. Fig. 3) ausgebildet. Zu einer Noppenform gelangt man z. B., wenn die Wellentäler oder die Wellenberge in der Fig. 3 durch ein in der Absorberebene 15 liegendes Material des Absorbers 10 ersetzt werden. Ein Abstand der Noppen bzw. der Wellentäler und Wellenberge ist dabei vergleichsweise groß, sodass der thermische Abstandhalter 20 gut appliziert werden kann und sich gut mit der Absorberversteifung 14 des Absorbers 10 verbindet. Eine z. B. anwendbare Amplitude beträgt z. B. 1,5 mm bis 4 mm, insbesondere 2 mm bis 3 mm, wobei eine Dicke des Absorberblechs 10 z. B. 3 mm, 3,5 mm, 0,4 mm oder 0,5 mm beträgt. Ein Abstand der Wellenberge bzw. ein gegenseitiger Abstand zwischen zwei direkt benachbarten Noppen (Vorsprünge) entspricht dabei bevorzugt im Wesentlichen einem Abstand der Rohre der Verrohrung 16 des Absorbers 10.

## Patentansprüche

1. Absorber (10) für einen Kollektor, bevorzugt einen thermischen Solarkollektor, zur Wärmeerzeugung, z. B. für eine Warmwasserbereitung und/oder eine Heizungsunterstützung, wobei der Absorber (10) einen vollständig um den Absorber (10) herumlaufenden Außenrand (12) aufweist, **dadurch gekennzeichnet, dass**
wenigstens ein Abschnitt (14) des Außenrands (12) als eine Absorberversteifung (14) ausgebildet ist, wobei der Abschnitt (14) des Außenrands (12) wiederholt von einer Absorberebene (15) in wenigstens eine Richtung herausgebogen ist.

2. Absorber (10) gemäß vorhergehendem Anspruch, **dadurch gekennzeichnet, dass** eine Außenkante (13) des Absorbers (10) bzw. Außenrands (12) korrespondierend zur Absorberversteifung (14) herausgebogen ist, oder
die Außenkante (13) des Absorbers (10) bzw. Außenrands (12) in der Absorberebene (15) liegt oder zur Absorberebene (15) im Wesentlichen parallel verschoben ist.

3. Absorber (10) gemäß einem der vorhergehenden Ansprüche, **dadurch gekennzeichnet, dass**:
• der Abschnitt (14) des Außenrands (12) bzw. die Absorberversteifung (14) abseits der Außenkante (13) des Außenrands (12) bzw. des Absorbers (10) im Außenrand (12) vorgesehen ist;
• zwischen der Außenkante (13) des Außenrands (12) bzw. des Absorbers (10) und dem Abschnitt (14) des Außenrands (12) bzw. der Absorberversteifung (14) ein Außenbund (17) vorgesehen ist; und/oder
• der Abschnitt (14) des Außenrands (12) bzw. die Absorberversteifung (14) bis zur Außenkante (13) des Außenrands (12) bzw. des Absorbers (10) reicht.

4. Absorber (10) gemäß einem der vorhergehenden Ansprüche, **dadurch gekennzeichnet, dass**:
• die Absorberversteifung (14) noppenförmig von oder an der Absorberebene (15) wiederholt in eine Richtung und/oder wechselweise wellenförmig in zwei Richtungen weggebogen ist;
• eine Amplitude oder ein Spitze-Tal-Wert der Absorberversteifung (14) in Bezug auf eine Außenabmessung des Absorbers (10) vergleichsweise klein ist;
• die Amplitude oder der Spitze-Tal-Wert im Wesentlichen das zwei-, drei-, vier-, fünf-, sechs-, sieben-, acht-, neun-, zehn-, zwölf-, 14-, 16-, 18-, 20-, 25-fache einer Dicke des Absorbers (10) entspricht; und/oder
• eine Wellenlänge der Absorberversteifung (14) im Wesentlichen einem Abstand einer Verrohrung (16) des Absorbers (10) entspricht.

5. Absorber (10) gemäß einem der vorhergehenden Ansprüche, **dadurch gekennzeichnet, dass**:
• die Absorberversteifung (14) im Wesentlichen vollständig um den Absorber (10) herumlaufend ausgebildet ist;
• der Außenbund (17) im Wesentlichen vollständig um den Absorber (10) herumlaufend ausgebildet ist;
• der Absorber (10) vergleichsweise flach ausgebildet und/oder frei von einem tiefgeprägten thermisch wirksamen Bereich (15) ist;
• der Absorber (10) Aluminium aufweist, insbesondere aus einem Aluminiumblech hergestellt ist; und/oder
• der Absorber (10) Kupfer aufweist, insbesondere aus einem Kupferblech hergestellt ist.

6. Glas-Absorber-Verbund (2) für einen Kollektor, bevorzugt einen thermischen Solarkollektor zur Wärmeerzeugung, z. B. für eine Warmwasserbereitung und/oder eine Heizungsunterstützung, mit
einem Absorber (10), einer über dem Absorber (10) angeordneten Glasscheibe (30) und einem zwischen dem Absorber (10) und der Glasscheibe (30) eingebrachten thermischen Abstandhalter (20), **dadurch gekennzeichnet, dass**
wenigstens ein Bereich des thermischen Abstandhalters (20) auf einem Abschnitt (14) des Absorbers (10) vorgesehen ist, in/an welchem der Absorber (10) eine Absorberversteifung (14) besitzt.

7. Glas-Absorber-Verbund (2) gemäß vorhergehendem Anspruch, **dadurch gekennzeichnet, dass** sich die Absorberversteifung (14) entlang wenigstens eines Abschnitts (14) des Absorbers (10) erstreckt, wobei
die Absorberversteifung (14) bevorzugt eine sich gegenüber einer Absorberebene (15) stetig ändernde Form besitzt, und die Form der Absorberversteifung (14) insbesondere eine sich selbst ähnliche Form ist.

8. Glas-Absorber-Verbund (2) gemäß einem der vorhergehenden Ansprüche, **dadurch gekennzeichnet, dass**:
• die Absorberversteifung (14) wiederholt in eine Richtung von oder an der Absorberebene (15) wegerstreckend vorgesehen ist; und/oder
• die Absorberversteifung (14) wiederholt wechselweise in zwei Richtungen von oder an der Absorberebene (15) wegerstreckend vorgesehen ist.
• die Absorberversteifung (14) wiederholt von oder an der Absorberebene (15) in wenigstens eine Richtung weggebogen ist;
• die Absorberversteifung (14) noppenförmig oder wellenförmig an der Absorberebene (15) ausgebildet ist;

9. Glas-Absorber-Verbund (2) gemäß einem der vorhergehenden Ansprüche, **dadurch gekennzeichnet, dass**:
• der thermische Abstandhalter (20) als ein thermoplastischer Abstandhalter (20) ausgebildet ist;
• zwischen dem thermischen Abstandhalter (20), der Glasscheibe (30) und dem Absorber (10) ein mechanischer Abstandhalter (40) im Glas-Absorber-Verbund (2) eingerichtet ist;
• der mechanische Abstandhalter (40) auf einem Außenrand (12) oder einem Außenbund (17) des Absorbers (10) vorgesehen ist; und/oder
• der mechanische Abstandhalter (40) als ein Silikon-Abstandhalter (40) ausgebildet ist.

10. Glas-Absorber-Verbund (2) gemäß einem der vorhergehenden Ansprüche, **dadurch gekennzeichnet, dass**:
• die Absorberversteifung (14) mit dem Absorber (10) einteilig oder einstückig verbunden ist;
• die Absorberversteifung (14) mit dem Absorber (10) stofflich einstückig oder integral ausgebildet ist;
• der Absorber (10) eine Mäander-Verrohrung (16) oder eine Harfen-Verrohrung (16) aufweist; und/oder
• der Glas-Absorber-Verbund (2) einen Absorber (10) nach einem der Ansprüche 1 bis 5 aufweist.

11. Kollektor, bevorzugt thermischer Solarkollektor (1), zur Wärmeerzeugung, z. B. für eine Warmwasserbereitung und/oder eine Heizungsunterstützung, **dadurch gekennzeichnet, dass**
der Kollektor, bevorzugt der thermische Solarkollektor (1), insbesondere ein thermischer Flachkollektor (1), einen Absorber (10) nach einem der Ansprüche 1 bis 5 aufweist, und/oder
der Kollektor, bevorzugt der thermische Solarkollektor (1), insbesondere ein thermischer Flachkollektor (1), einen Glas-Absorber-Verbund (2) nach einem der Ansprüche 6 bis 10 aufweist.

12. Kollektor gemäß vorhergehendem Anspruch, **dadurch gekennzeichnet, dass**
• der Kollektor (1) als ein Aufdach- (1), ein Indach- (1), ein Flachdach- (1), ein Ständer- (1), ein Aufständer- (1) oder ein Fassaden-Kollektor (1) ausgebildet ist;
• der Kollektor (1) als ein Mäander-Kollektor (16) oder ein Harfen-Kollektor ausgebildet ist;
• der Kollektor (1) oder ein Bestandteil davon als ein Flachkollektor (1) ausgebildet ist; und/oder
• der Kollektor (1) wenigstens ein Kollektormodul (1), insbesondere wenigstens ein Solarmodul (1) aufweist.
